# EUROPÄISCHE PATENTSCHRIFT

(11) **EP 2 474 802 B1**
(45) Veröffentlichungstag und Bekanntmachung des Hinweises auf die Patenterteilung: **23.07.2014**
(21) Anmeldenummer: 11000076.7
(22) Anmeldetag: 07.01.2011
(51) Int. Cl.: F28D 7/12

(54) **Verwendung eines Wärmetauschers in einem Abwasserkanal**
Use of a heat exchanger in a sewage tunnel
Utilisation d'un échangeur thermique dans un canal d'égout

(43) Veröffentlichungstag der Anmeldung: 11.07.2012
(73) Patentinhaber: Kopf Holding GmbH, 72172 Sulz-Bergfelden (DE)
(72) Erfinder: Schmid, Jürgen, 78628 Rottweil (DE)
(74) Vertreter: Klocke, Peter

(56) Entgegenhaltungen:
- EP-A1- 1 591 740
- DE-A1- 2 732 027
- DE-A1- 3 436 561
- DE-U1-202004 008 737
- JP-A- 2008 241 057
- US-A1- 2002 058 225
- US-A1- 2002 162 643

## Beschreibung

Die Erfindung betrifft die Verwendung eines Wärmetauschers in einem Abwasserkanal insbesondere zur Gewinnung oder auch zur Abgabe von Wärme in einem Abwasserkanal.

Damit sich nichts verfängt werden in Abwasserkanälen üblicherweise plattenförmige Wärmetauscher bündig in Wand oder Boden eines Abwasserkanals eingelassen oder auf Wand oder Boden des Abwasserkanals angebracht und zumindest ein in Strömungsrichtung vorderer Rand der Wärmetauscher wird mit Mörtel oder dgl. mit einer Schräge versehen. Der Nachteil der Anbringung eines plattenförmigen Wärmetauschers an Wand oder Boden eines Kanals ist, dass dort keine Strömung herrscht, sondern das Wasser ruht. Eine Strömung besteht erst mit zunehmendem Abstand von dem Boden oder der Wand. Ein Wärmetausch ist dadurch deutlich schlechter als bei einem Wärmetauscher, der sich in einer Strömung befindet. Bei der Anordnung eines Wärmetauschers am Boden kommt eine Belegung mit Sand und sonstigem dazu, die den Wärmetausch weiter verschlechtert. Außerdem ist die Korrosionsgefahr in stehendem Wasser, also am Boden oder einer Wand eines Abwasserkanals wesentlich höher, weil der Wärmetauscher länger mit korrosiven Medien in Kontakt steht. Abwasser kann u.a. Schwefelwasserstoff als korrosives Medium enthalten, im Winter kommt Streusalz hinzu. Abwasser kann so stark korrodierend wirken, dass selbst als korrosionsfest geltende Stähle und sonstige metallische Werkstoffe angegriffen werden.

Die Offenlegungsschrift DE 27 32 027 offenbart einen Wärmetauscher, der in einem Kanal angeordnet ist. Der bekannte Wärmetauscher hat die Form eines stark abgeplatteten Rotationsellipsoids, das horizontal, d. h. mit vertikaler Symmetrieachse, in einem Kanal angeordnet ist. In der Mitte einer Oberseite sind koaxial zwei Rohre ineinander am Wärmetauscher angebracht, deren äußeres eine Auslassleitung und deren inneres eine Einlassleitung ist. Das äußere Rohr dient zugleich zur Befestigung des Wärmetauschers an einem Träger, der nach Art einer Abdeckung horizontal auf bzw. über dem Kanal angeordnet ist. Durch die Form als abgeplattetes Rotationsellipsoid ist der bekannte Wärmetauscher strömungsgünstig.

Die Offenlegungsschrift DE 34 36 561 A1 offenbart einen Wärmetauscher als Gasvorwärmer, der zueinander parallele Rohre aufweist und quer in einem Rauchgaskanal angeordnet ist. Zur Reinigung ist der Wärmetauscher seitlich aus dem Rauchgaskanal heraus in Reinigungskammern verschiebbar, die an den Rauchgaskanal angesetzt sind. In einer Alternative sind mehrere Wärmetauscher sternförmig als Karussell angeordnet, wobei immer nur ein Wärmetauscher im Rauchgaskanal in Betrieb und der oder die anderen Wärmetauscher in eine Reinigungskammer seitlich aus dem Rauchgaskanal heraus gedreht sind.

Die Europäische Patentanmeldung EP 1 591 740 A1 offenbart einen Wärmetauscher, der in eine Wand eines Abwasserkanals eingelassen ist. Zur Verhinderung einer Sielhaut sind Kupferbänder in Strömungsrichtung vor dem Wärmetauscher an der Kanalwand angebracht.

Aufgabe der Erfindung ist eine Verwendung eines strömungsgünstigen Wärmetauschers in einem Abwasserkanal, die vermeidet, dass sich Dinge wie Äste am Wärmetauscher oder zwischen dem Wärmetauscher und einer Wand oder einem Boden des Abwasserkanals verfangen.

Diese Aufgabe wird erfindungsgemäß durch die Merkmale des Anspruchs 1 gelöst. Der Wärmetauscher weist dabei einen strömungsgünstigen Bug auf. Mit Bug ist ein in Strömungsrichtung vorderer Teil des Wärmetauschers gemeint, also der Teil, der bei einer vorgesehenen Anordnung des Wärmetauschers von der Strömung angeströmt wird. Strömungsgünstig bedeutet eine konvex gerundete Form. Dabei ist nicht ein niedriger Strömungswiderstand maßgebend, sondern eine derart gerundete Form, die anströmendes Wasser oder ein sonstiges Medium und in ihm enthaltene Dinge zur Seite um den Wärmetauscher herum lenkt. Zweck der Formgebung des Bugs ist, dass sich Dinge, die im anströmenden Medium enthalten sind, nicht am Bug des Wärmetauschers verfangen. Der Bug des Wärmetauschers ist deswegen gerundet und weist keine Spitze auf, auch wenn eine solche strömungsgünstig wäre. Strömungsgünstig im Sinne der Erfindung ist dahingehend zu verstehen, ein Verfangen von Dingen aus der Strömung am Bug des Wärmetauschers zu vermeiden. Der Bug des Wärmetauschers kann wie eine Nabe eines Propellers eines Flugzeugs, und zwar eine gerundete- und keine Spitznabe, geformt sein. In Abwasser können Windeln, Textilien, Haare, Seile, Plastikfolien und -tüten und sonstiges enthalten sein, die sich möglichst nicht am Wärmetauscher verfangen sollen.

Der Wärmetauscher ist in einem Abwasserkanal angeordnet, vorzugsweise mit Abstand von einem Boden und Wänden oder allgemein von Wandungen des Abwasserkanals. Das hat den Vorteil, dass der Wärmetauscher vom Abwasser umströmt wird, wodurch ein Wärmeübergang zwischen Abwasser und Wärmetauscher wesentlich verbessert ist. Durch die Umströmung ist eine Korrosionsgefahr des Wärmetauschers in einem korrosiven Medium herabgesetzt. Die Korrosionsgefahr ist insbesondere dann herabgesetzt, wenn das Medium, wie Abwasser, nur zeitweise korrosiv ist. Der Wärmetauscher hat aufgrund der strömungsgünstigen Form seines Bugs den weiteren Vorteil, dass die Gefahr, dass sich Dinge am Bug verfangen, klein ist und dass etwas, das sich dennoch einmal am Bug des Wärmetauschers verfangen hat, normalerweise aufgrund sich ändernder Strömungsgeschwindigkeit bei steigendem und/oder fallendem Pegel, wieder vom Bug löst. Die erfindungsgemäße Verwendung des Wärmetauschers ist in Strömungen sinnvoll, die Dinge mit sich führen können, weil das Risiko gering ist, dass sich Dinge am erfindungsgemäβen Wärmetauscher verfangen. Durch eine Schwenklagerung ist der Wärmetauscher seitlich in dem Abwasserkanal beweglich und kann dadurch Ästen oder dgl. zur Seite ausweichen.

Vorzugsweise ist der Bug oder jedenfalls dessen vorderster Teil kugelförmig gerundet, wobei eine kugelähnliche Form als kugelförmig im Sinne der Erfindung angesehen werden soll. An den kugelförmigen Bug kann sich ein Kegelstumpf oder können sich mehrere, zunehmend spitzwinkligere Kegelstümpfe anschlieβen. Eine solche Formgebung des Bugs ist eine gute Annäherung an eine konvexe Krümmung und kann zum Zwecke des Vermeidens eines Verfangens von Dingen aus der Strömung am Bug des Wärmetauschers als gleichwertig angesehen werden.

Eine ebenfalls bevorzugte Ausgestaltung der Erfindung sieht ein Rotationsparaboloid als Bug des Wärmetauschers vor. Die angegebenen Formgebungen für den Bug sind Konkretisierungen der Form des strömungsgünstigen Bugs des erfindungsgemäßen Wärmetauschers. Sie alle haben den mehrfach genannten Zweck, eine Strömung, in der sich der Wärmetauscher befindet, am Bug zur Seite, nach oben und nach unten umzulenken und um den Bug und den Wärmetauscher insgesamt herumzulenken, und zwar so, dass Dinge, die sich in der Strömung befinden, sich nicht am Bug verfangen, sondern am Bug zur Seite, nach oben oder nach unten ausweichen und am Wärmetauscher vorbeiströmen. Die Formgebung des Bugs folgt diesem Zweck. Der Bug soll auch möglichst nichts aufweisen, woran Dinge aus der Strömung hängen bleiben können, sondern so geformt sein, dass solche Dinge an ihm abgleiten.

Eine Ausgestaltung der Erfindung sieht vor, dass sich an den Bug ein zylindrischer Abschnitt des Wärmetauschers anschließt. Da ein kleiner Strömungswiderstand kein wesentliches Kriterium, oder jedenfalls ein Kriterium, das dem Vermeiden eines Verfangens von Dingen aus der Strömung nachgeordnet für den erfindungsgemäßen Wärmetauscher ist, kann sich an den strömungsgünstigen, konvex gekrümmten Bug ohne weiteres ein zylindrischer Abschnitt anschließen. Mit einem bauchigen Abschnitt ließe sich zwar der Strömungswiderstand verringern, das dürfte aber normalerweise den größeren Herstellungsaufwand nicht rechtfertigen.

Für alle Formgebungen des Bugs und des Wärmetauschers insgesamt gilt, dass sie breiter oder schmaler als hoch sein können, d.h. außer einem kreisrunden Querschnitt kann der Wärmetauscher auch einen breiteren oder schmaleren Querschnitt aufweisen als er hoch ist, also beispielsweise einen elliptischen Querschnitt. Eine Fläche des Querschnitts ändert sich über die Länge des Wärmetauschers zumindest im Bereich des Bugs, die Form des Querschnitts kann sich über die Länge des Wärmetauchers ändern oder gleich bleiben.

Eine Ausgestaltung der Erfindung sieht einen bioziden Wärmetauscher vor, d.h. eine Ausgestaltung, die der Ausbildung einer Sielhaut auf dem Wärmetauscher entgegenwirkt. Das vermeidet, dass sich tote oder lebende Biomasse auf dem Wärmetauscher absetzt. Zur bioziden Ausbildung kann der Wärmetauscher beispielsweise Kupfer im Bereich des Bugs aufweisen.

Eine Ausgestaltung sieht eine höhenverstellbare Anordnung des Wärmetauschers im Abwasserkanal vor, wodurch er einfach an die Geometrie des Abwasserkanals und/oder einen Pegelstand anpassbar ist.

Zur Befestigung des Wärmetauschers im Abwasserkanal sieht eine Ausgestaltung der Erfindung einen Halter vor, der ein symmetrisches Tragflächenprofil aufweist. Die Symmetrie vermeidet eine zur Seite gerichtete Kraft durch die Strömung. Das Tragflächenprofil weist einen niedrigen Strömungswiderstand auf und stabilisiert den Wärmetauscher in der Strömung. Wie die Formgebung des Bugs des Wärmetauschers wirkt auch das Tragflächenprofil einem Hängenbleiben von Dingen aus der Strömung am Halter entgegen. Ein weiterer Vorteil ist die Möglichkeit, Anschlüsse für Zu- und Rücklauf zum und vom Wärmetauscher durch den Halter zu führen.

Ein vorderer Rand des Halters verläuft vorzugsweise schräg nach oben/hinten, wobei der Rand gerade oder beispielsweise auch gekrümmt sein kann. Mit vorderer Rand ist wieder der bei einer vorgesehenen Anordnung des Wärmetauschers in einer Strömung der in Strömungsrichtung vordere, der Strömung zugewandte und von ihr angeströmte Rand des Halters gemeint. Sollte sich etwas am vorderen Rand des Halters verfangen, wird es bei steigendem Wasserpegel aufgrund des schräg verlaufenden vorderen Randes des Halters nach oben geschoben und kommt dabei regelmäßig vom vorderen Rand des Halters frei.

Eine Ausgestaltung der Erfindung sieht einen Schlauch oder dgl. am vorderen Rand des Halters vor. Der Schlauch lässt sich durch Druck aufweiten, wodurch sich ebenfalls Dinge, die sich verfangen haben, vom Halter lösen lassen, Durch Druckgasstöße lassen sich Gasblasen im Schlauch erzeugen, wenn dieser mit einer Flüssigkeit gefüllt ist. Die Gasblassen weiten den Schlauch örtlich auf. Durch Auftrieb strömen die Gasblasen und mit ihnen die Aufweitungen des Schlauchs nach oben. Die aufsteigenden Aufweitungen des Schlauchs transportieren evtl. verfangene Dinge nach oben, wobei sie regelmäßig vom Halter freikommen.

Eine Ausgestaltung der Erfindung sieht einen Ringspalt an einer Innenseite einer Außenwand des Wärmetauschers vor, also beispielsweise eine doppelwandige Ausbildung des Wärmetauschers. Der Ringspalt erstreckt sich über die gesamte oder einen Teil der Länge des Wärmetauschers. In Umfangsrichtung kann der Ringspalt geschlossen oder unterbrochen sein. Anschlüsse zum und vom Wärmetauscher sind in Längsrichtung versetzt angebracht. Der Ringspalt vermeidet, jedenfalls wenn er eng genug ist, einen hydraulischen Kurzschluss, d.h. dass eine Durchströmung des Wärmetauschers direkt vom einen zum anderen Anschluss fließt und bewirkt, dass sich die Strömung über den Umfang des Wärmetauschers verteilt. Die Spaltbreite des Ringspalts beträgt beispielsweise etwa 3-5 mm.

Eine Oberfläche des Wärmetauschers muss nicht glatt sein, sondern kann beispielsweise auch gewellt sein. Dadurch werden in einer Strömung Turbulenzen erzeugt, die den Wärmeübergang verbessern.

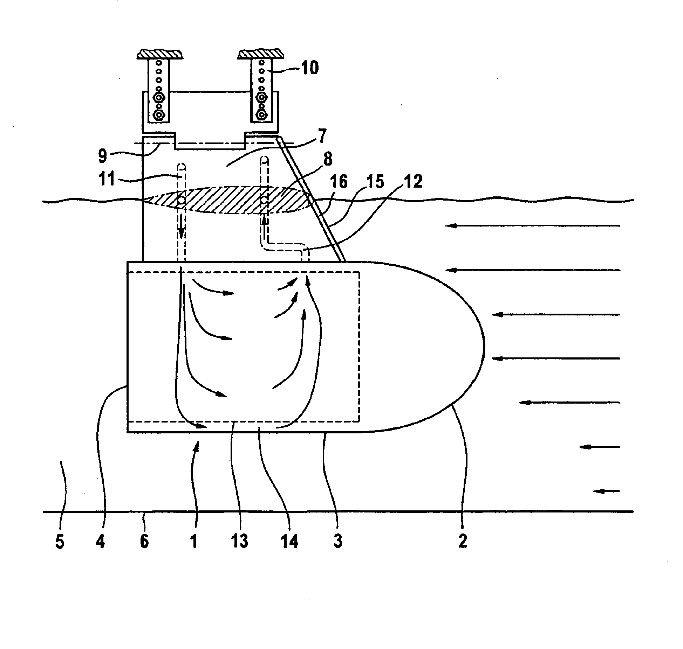

Die Erfindung wird nachfolgend anhand eines in der Zeichnung dargestellten Ausführungsbeispiels näher erläutert. Die einzige Figur zeigt die Verwendung eines Wärmetauschers, gemäß der Erfindung. Die Zeichnung ist als vereinfachte und schematisierte Darstellung zur Erläuterung und zum Verständnis der Erfindung zu verstehen.

Der in der Zeichnung dargestellte Wärmetauscher 1 weist einen strömungsgünstigen Bug 2 auf, an den sich ein zylindrischer Abschnitt 3 anschließt, der an einem Heck 4 mit einer ebenen Wand verschlossen ist. Der Bug 2 hat die Form eines Rotationsparaboloids, er kann auch als kugelförmig aufgefasst werden. Allgemein ausgedrückt hat der Bug 2 des Wärmetauschers 1 eine konvexe Krümmung ohne Spitze. Der Bug 2 ist ein Vorderteil des Wärmetauschers 1, also der Teil des Wärmetauschers 1, der bei einer vorgesehenen Anordnung des Wärmetauschers 1 in einer Strömung der Strömung entgegengerichtet ist und angeströmt wird.

Im Ausführungsbeispiel hat der Wärmetauscher 1 über seine gesamte Länge einen kreisförmigen Querschnitt, wobei sich der Querschnitt am Bug 2 beginnend von Null kontinuierlich auf den Durchmesser des zylindrischen Abschnitts 3 vergrößert, in welchem der Querschnitt des Wärmetauschers 1 konstant ist. Es sind allerdings auch andere Querschnitte möglich, die breiter oder schmaler als hoch sind, beispielsweise liegende oder stehende ovale oder elliptische Querschnitte. Breite oder schmale Querschnitte des Wärmetauschers 1 sind beispielsweise zur Anpassung an breite oder schmale Kanäle möglich.

Der Wärmetauscher 1 ist in einem oben offenen Abwasserkanal 5 mit beispielsweise rechteckigem Querschnitt angeordnet. Ein Boden des Abwasserkanals 5 ist mit 6 bezeichnet. Der Wärmetauscher 1 ist mit Abstand vom Boden 6 und von Wänden des Abwasserkanals 5 angeordnet, also an einer Stelle, an der eine Strömung herrscht. Eine Strömungsgeschwindigkeit über einer Höhe des Abwasserkanals 5 ist in der Zeichnung rechts mit Pfeilen angedeutet. Unmittelbar am Boden 6 ist die Strömungsgeschwindigkeit Null, das Abwasser ruht, und steigt dann kontinuierlich mit zunehmendem Abstand vom Boden 6 an bis die Strömung mit einem gewissen Abstand vom Boden 6 näherungsweise konstant bleibt. Diese Geschwindigkeitsverteilung gilt entsprechend auch für die Seitenwände des Abwasserkanals 5. Der Wärmetauscher 1 ist wie bereits gesagt mit Abstand vom Boden 6 und von den Seitenwänden des Abwasserkanals 5 in der Abwasserströmung angeordnet, also an einer Stelle im Querschnitt des Abwasserkanals 6, an der das Abwasser eine hohe Strömungsgeschwindigkeit aufweist.

Die strömungsgünstige, konvexe Krümmung des Bugs 2 des Wärmetauschers 1 lenkt die Abwasserströmung zu den Seiten, nach oben und nach unten um den Wärmetauscher 1 herum. Im Abwasser treibende Dinge werden von der Strömung mitgenommen und bei der Umlenkung des Abwassers am Bug 2 des Wärmetauschers 1 zu den Seiten, nach oben oder nach unten am Bug 2 und am Wärmetauscher 1 vorbeigeführt. Das Abwasser kann Dinge wie Textilien, Taschen, Tüten, Folien, Seile mitführen. Die strömungsgünstige, konvexe Krümmung des Bugs 2 vermeidet, dass sich solche Dinge am Bug 2 verfangen. Sollte doch einmal etwas am Bug 2 des Wärmetauschers 1 hängen bleiben, sorgt die Strömung des Abwassers dafür, dass es sich nach einiger Zeit vom Bug 2 löst und mit dem Abwasser am Wärmetauscher 1 vorbeiströmt. Dabei ist zu bedenken, dass sich ein Pegel des Abwassers im Abwasserkanal 5 und die Strömungsgeschwindigkeit ändern, der Pegel fällt gelegentlich und kann bei einem Gewitterregen stark ansteigen. Dabei ändern sich die Strömungsgeschwindigkeit und die Anströmungsverhältnisse am Bug 2 des Wärmetauschers 1, wodurch etwas, das sich am Bug 2 verfangen haben sollte, zuverlässig auch wieder löst. Ursache für das Lösen ist die gerundete Form des Bugs 2.

Der Wärmetauscher 1 ist mit einem Halter 7 im Abwasserkanal 5 gehalten. Die Form des Halters 7 erinnert an einen kurzen Flügel, er weist ein symmetrisches Tragflächenprofil 8 auf, das in der Figur in den Halter 7 eingezeichnet ist. Der flügelförmige Halter 7 stabilisiert den Wärmetauscher 1 in der Abwasserströmung.

Der Halter 7 weist einen schräg nach hinten/oben verlaufenden vorderen Rand 15 auf. Dinge aus der Strömung, die gegen den vorderen Rand 15 des Halters 7 strömen, werden am schrägen vorderen Rand 15 des Halters 7 von der Strömung angehoben und kommen dabei frei.

An seinem vorderen Rand 15 weist der Halter 7 einen Schlauch 16 auf, der mit einer Flüssigkeit gefüllt ist. Durch Druckgasstöße lassen sich im Schlauch 16 Gasblasen erzeugen, die den Schlauch 16 örtlich aufweiten. Durch Auftrieb steigen die Gasblasen im Schlauch 16 und mit Ihnen die Aufweitungen des Schlauchs 16 auf. Sie fördern gegen den vorderen Rand 15 geströmte Dinge nach oben, wobei solche Dinge vom Halter 7 frei kommen.

Der Halter 7 geht ohne Spalt in den Wärmetauscher 1 über, vorzugsweise mit gerundeten Kehlen. Das vermeidet, dass sich etwas aus der Strömung am Übergang vom Wärmetauscher 1 zu seinem Halter 7 verfängt oder festklemmt.

Der Halter 7 ist um eine zum Wärmetauscher 1 parallele Achse 9 schwenkbar oberhalb des Abwasserkanals 5 befestigt. Durch die Schwenkbarkeit ist der Wärmetauscher 1 seitlich im Abwasserkanal 5 beweglich und kann dadurch Dingen wie Ästen ausweichen. Die Beweglichkeit zur Seite ermöglicht ein Ausweichen des Wärmetauschers 1 und verhindert, dass sich beispielsweise Äste zwischen dem Wärmetauscher 1 und Seitenwänden des Abwasserkanals 5 verklemmen. Solche Äste drücken den Wärmetauscher 1 zur Seite und sich selbst zwischen dem Wärmetauscher 1 und der Seitenwand des Abwasserkanals 5 durch.

Zur Höhenverstellbarkeit ist der Halter 7 an gelochten Profilstangen 10 befestigt, die beispielsweise von einer Decke oder einem Gestell nach unten ragen. Der Halter 7 lässt sich an verschiedenen Löchern der Profilstangen 10 und dadurch in verschiedenen Höhen befestigen, wodurch eine Höhenverstellung des Wärmetauschers 1 im Abwasserkanal 5 möglich ist.

Anschlüsse 11, 12, nämlich ein Zulauf 11 und ein Ablauf 12 für eine Wärmetauscherflüssigkeit sind als Rohrleitungen durch den Halter 7 geführt. Sie münden in Längsrichtung des Wärmetauschers 1 versetzt, also mit axialem Abstand voneinander in einen hinteren und in einen vorderen Bereich des zylindrischen Abschnitts 3 des Wärmetauschers 1. Innerhalb des zylindrischen Abschnitts 3 des Wärmetauschers 1 ist konzentrisch ein Innenzylinder 13 angeordnet, so dass der Wärmetauscher 1 im zylindrischen Abschnitt 3 doppelwandig ist. Zwischen dem zylindrischen Abschnitt 3 und dem Innenzylinder 13, also an einer Innenseite einer Außenwand des Wärmetauschers 1, besteht ein Ringspalt 14, der sich zylinderrohrförmig in Umfangs- und in Längsrichtung des Wärmetauschers 1 erstreckt. Der Ringspalt 14 hat eine Breite von etwa drei bis fünf Millimeter. Der Ringspalt 14 ist so eng, dass er einen Druckverlust der durchströmenden Wärmetauscherflüssigkeit verursacht, die eine Durchströmung des Ringspalts 14 in Umfangsrichtung bewirkt, wie es die Pfeile in der Zeichnung andeuten. Der enge Ringspalt 14 verhindert einen hydraulischen Kurzschluss, also eine Strömung der Wärmetauscherflüssigkeit ausschließlich oder im wesentlichen auf kürzestem Weg vom Zulauf 11 zum Ablauf 12. Die Strömung der Wärmetauscherflüssigkeit im Ringspalt 14 in Umfangsrichtung verteilt die den Wärmetauscher 1 durchströmende Wärmetauscherflüssigkeit über eine große Fläche der Außenwand, so dass eine großflächige Wärmeübertragung zwischen dem den Wärmetauscher 1 außen umströmenden Abwasser und der die Außenwand des Wärmetauschers 1 innen überströmenden Wärmetauscherflüssigkeit stattfindet. Dadurch wird ein guter Wirkungsgrad des Wärmetauschers 1 erzielt.

Der Wärmetauscher 1 ist aus einem korrosionsfesten Stahl hergestellt. Am Bug 2 weist er Kupfer auf, er ist beispielsweise kupferplattiert oder weist Kupfer als Wandung auf. Durch das Kupfer ist der Wärmetauscher 1 biozid, er wirkt der Ausbildung einer Sielhaut, also einem Anlagern toter und lebender Biomasse sowie anorganischer Bestandteile entgegen.

## Patentansprüche

1. Verwendung eines Wärmetauschers (1) in einem Abwasserkanal (5), **dadurch gekennzeichnet, dass** der Wärmetauscher (1) einen strömungsgünstigen Bug (2) aufweist, wobei der Bug (2) des Wärmetauschers (1) eine konvexe Krümmung ohne Spitze aufweist und dass der Warmetauscher (1) durch eine Schwenklagerung seitlich in dem Abwasserkanal (5) beweglich ist und dadurch Dingen wie Ästen ausweichen kann.

2. Verwendung nach Anspruch 1, **dadurch gekennzeichnet, dass** der Wärmetauscher (1) einen kugelförmigen Bug (2) aufweist.

3. Verwendung nach Anspruch 2, **dadurch gekennzeichnet, dass** sich an den kugelförmigen Bug (2) ein oder mehrere, zunehmend spitzwinkligere Kegelstümpfe anschließen.

4. Verwendung nach Anspruch 1 oder 2, **dadurch gekennzeichnet, dass** der Bug (2) des Wärmetauschers (1) die Form eines Rotationsparaboloids aufweist.

5. Verwendung nach einem der vorhergehenden Ansprüche, **dadurch gekennzeichnet, dass** sich an den Bug (2) ein zylindrischer Abschnitt (3) anschließt.

6. Verwendung nach einem der vorhergehenden Ansprüche, **dadurch gekennzeichnet, dass** der Wärmetauscher (1) ein Biozid aufweist.

7. Verwendung nach einem der vorhergehenden Ansprüche, **dadurch gekennzeichnet, dass** der Wärmetauscher (1) höhenverstellbar im Abwasserkanal (5) angeordnet ist.

8. Verwendung nach einem der vorhergehenden Ansprüche, **dadurch gekennzeichnet, dass** der Wärmetauscher (1) mit einem Halter (7) im Abwasserkanal (5) befestigt ist, der ein symmetrisches Tragflächenprofil (8) aufweist.

9. Verwendung nach Anspruch 8, **dadurch gekennzeichnet, dass** ein vorderer Rand (15) des Halters (7) schräg nach oben/hinten verläuft.

10. Verwendung nach einem der Ansprüche 8 oder 9, **dadurch gekennzeichnet, dass** der vordere Rand (15) des Halters (7) einen Schlauch (16) aufweist.

11. Verwendung nach einem der vorhergehenden Ansprüche, **dadurch gekennzeichnet, dass** der Wärmetauscher (1) zwei in Längsrichtung versetzte Anschlüsse (11, 12) und einen Ringspalt (14) an einer Innenseite seiner Außenwand aufweist, der sich in Umfangs- und in Längsrichtung des Wärmetauschers (1) erstreckt und durch den Anschlüsse (11, 12) kommunizieren.

## Claims

1. Use of a heat exchanger (1) in a waste water channel (5), **characterised in that** the heat exchanger (1) comprises a bow (2) which favours the flow, wherein the bow (2) of the heat exchanger (1) comprises a convex curvature without a point, and that the heat exchanger (1) is movable laterally in the waste water channel (5) by means of a swivel bearing and can therefore deflect objects such as branches.

2. Use according to claim 1, **characterised in that** the heat exchanger (1) comprises a spherical bow (2).

3. Use according to claim 2, **characterised in that** one or more truncated cones of increasingly acute angles are connected to the spherical bow (2).

4. Use according to claim 1 or 2, **characterised in that** the bow (2) of the heat exchanger (1) comprises the shape of a rotation parabaloid.

5. Use according to any one of the preceding claims, **characterised in that** a cylindrical section (3) is attached to the bow (2).

6. Use according to any one of the preceding claims, **characterised in that** the heat exchanger (1) comprises a biocide.

7. Use according to any one of the preceding claims, **characterised in that** the heat exchanger (1) is arranged in the waste water channel (5) in a height-adjustable manner.

8. Use according to any one of the preceding claims, **characterised in that** the heat exchanger (1) is secured in the waste water channel (5) by a holding element (7), which comprises a symmetrical wing profile (8).

9. Use according to claim 8, **characterised in that** a front edge (15) of the holding element (7) runs obliquely upwards/backwards.

10. Use according to one of claims 8 or 9, **characterised in that** the front edge (15) of the holding element (7) comprises a hose (16).

11. Use according to any one of the preceding claims, **characterised in that** the heat exchanger (1) comprises two connections (11, 12) offset in the longitudinal direction and an annular gap (14) on an inner side of its outer wall, which extends in the circumferential and longitudinal direction of the heat exchanger (1) and communicate through the connections (11, 12).

## Revendications

1. Utilisation d'un échangeur de chaleur (1) dans une canalisation d'eaux usées (5), **caractérisée en ce que** l'échangeur de chaleur (1) présente une proue (2) profilée pour favoriser l'écoulement, laquelle proue (2) de l'échangeur de chaleur (1) présente une courbure convexe sans pointe, et que l'échangeur de chaleur (1) est mobile latéralement dans la canalisation d'eaux usées (5) au moyen d'un montage pivotant et peut ainsi éviter des objets tels que des branches.

2. Utilisation selon la revendication 1, **caractérisée en ce que** l'échangeur de chaleur (1) présente une proue (2) sphérique.

3. Utilisation selon la revendication 2, **caractérisée en ce qu'**un ou plusieurs troncs de cône formant un angle de plus en plus aigu se raccordent à la proue (2) sphérique.

4. Utilisation selon la revendication 1 ou 2, **caractérisée en ce que** la proue (2) de l'échangeur de chaleur (1) présente la forme d'un paraboloïde de révolution.

5. Utilisation selon une des revendications précédentes, **caractérisée en ce qu'**une partie cylindrique (3) se raccorde à la proue (2).

6. Utilisation selon une des revendications précédentes, **caractérisée en ce que** l'échangeur de chaleur (1) présente un biocide.

7. Utilisation selon une des revendications précédentes, **caractérisée en ce que** l'échangeur de chaleur (1) est disposé de manière réglable en hauteur dans la canalisation d'eaux usées (5).

8. Utilisation selon une des revendications précédentes, **caractérisée en ce que** l'échangeur de chaleur (1) est fixé dans la canalisation d'eaux usées (5) au moyen d'un support (7) qui présente un profil de surface portante (8) symétrique.

9. Utilisation selon la revendication 8, **caractérisée en ce qu'**un bord avant (15) du support (7) s'étend en biais vers le haut/l'arrière.

10. Utilisation selon une des revendications 8 ou 9, **caractérisée en ce que** le bord avant (15) du support (7) présente un tuyau flexible (16).

11. Utilisation selon une des revendications précédentes, **caractérisée en ce que** l'échangeur de chaleur (1) présente deux raccords (11, 12) décalés dans la direction longitudinale et une fente annulaire (14) d'un côté intérieur de sa paroi extérieure, laquelle s'étend dans la direction circonférentielle et longitudinale de l'échangeur de chaleur (1) et par laquelle les raccords (11, 12) communiquent.
